# EUROPEAN PATENT SPECIFICATION

(11) **EP 0 789 733 B1**
(45) Date of publication and mention of the grant of the patent: **03.06.2009**
(21) Application number: 95937680.7
(22) Date of filing: 30.10.1995
(51) Int. Cl.: C09D 127/12, C09D 179/08

(54) **Process for applying an UNIVERSAL PRIMER FOR NON-STICK FINISH**
Verfahren zum Aufbringen eines UNIVERSALPRIMERS FÜR NICHTHAFTENDE FINISH-BELÄGE
Procédé pour l'application d'une COUCHE DE FOND UNIVERSELLE POUR REVETEMENTS ANTIADHESIFS

(30) Priority: 31.10.1994 US 331839; 31.10.1994 US 331843
(43) Date of publication of application: 20.08.1997
(73) Proprietor: E.I. DU PONT DE NEMOURS AND COMPANY, Wilmington, DE 19898 (US)
(72) Inventor: TANNENBAUM, Harvey, Paul, Wynnewood, PA 19096-3723 (US)
(74) Representative: Matthews, Derek Peter
(86) International application number: PCT/US1995/014074
(87) International publication number: WO 1996/013556

(56) References cited:
- EP-A- 0 260 660
- EP-A- 0 607 934
- EP-A- 0 669 384
- WO-A-92/10309
- WO-A-94/14904
- DE-A- 2 755 364
- FR-A- 2 253 801
- FR-A- 2 316 301
- FR-A- 2 319 694
- FR-A- 2 319 695
- US-A- 3 992 347
- US-A- 4 087 394
- US-A- 5 250 356

## Description

### BACKGROUND OF THE INVENTION

U.S. Pat. 4,087,394 (Concannon) discloses an aqueous dispersion of certain fluoropolymers, which dispersion contains dissolved film-forming material (binder) for forming a non-stick coating. Example 1 discloses the preparation of such a dispersion, containing 51 wt% TFE/HFP copolymer, 32 wt% polyamide acid salt (also called polyamic acid), 13.9 wt% carbon black pigment, and 2.3 wt% aluminum silicate extender supplied as part of the black pigment mill base and present as a grinding aid therein. The weight proportion of fluoropolymer to binder was 1.6:1. This dispersion was applied to an aluminum sheet and baked to a coating having excellent release properties. In the baking process, the coating composition is disclosed to tend to stratify, with the binder concentrating at the substrate surface to provide adhesion of the coating to it, and the fluoropolymer concentrating at the outer surface to provide the release property.

The aqueous dispersion approach of Concannon for creating the non-stick coating has been widely adopted for the creation of primer layers for overcoating with at least one fluoropolymer layer to produce non-stick finishes. In the primer application, the fluoropolymer concentrating at the top surface of the primer layer provides inter-coat adhesion to the fluoropolymer overcoat.

With the use of the Concannon approach in providing primer coating, several additional measures were taken. First, for improved release and easy clean, higher film builds (thickness) for the overcoat, i.e., a midcoat and a topcoat, each being primarily fluoropolymer, were used. Second, to obtain good intercoat adhesion between the primer layer and the midcoat, the weight ratio between fluoropolymer and binder in the primer layer was kept high, 2.4 and higher. Third, to obtain adequate adhesion of the primer layer, the substrate was roughened, e.g., by grit blasting when the substrate was metal and pre-coating of the substrate with a glass frit when the substrate was ceramic, e.g., enamel. This roughening provided a mechanical bond of the primer to the substrate in addition to the adhesion provided by the binder component of the primer layer.

In addition to providing improved adhesion, it became desirable to improve durability of the non-stick coating, and this was accomplished by adding inorganic filler film hardener, such as clay, to the fluoropolymer overcoat.

It became desirable to eliminate the step of roughening the substrate, which would require the primer to have the sole responsibility for achieving adhesion. Recent patents disclose the achievement of providing primers for non-stick finishes on certain smooth substrate surfaces, by controlling the stratification occurring during baking of the primer layer. U.S. Pats. 5,168,013 and 5,240,775 (both by -Tannenbaum) disclose that the fluoropolymer component should be composed of polytetrafluoroethylene (PTFE) of low and high melt viscosity or of PTFE and a TFE/PAVE copolymer, respectively. PCT publication WO 94/14904 (Thomas) discloses the fluoropolymer component to be two different perfluorocarbon resins generally having lower melt viscosity than the Tannenbaum PTFE and the binder component to be two different binders in certain ratios. The primers prepared in these references were applied to smooth degreased aluminum and had fluoropolymer to binder weight ratios of 2.5, 2.4, and 1.5, respectively.

This adhesion to certain smooth surfaces was achieved by not having filler film hardener present in the primer composition in any amount which could noticeably increase primer layer durability, with the attendant adverse effect of adhesion to the substrate. In Example 1 of Thomas the aluminum silicate is present as an extender (grinding aid) for the carbon black pigment, and its amount is only 3.2 wt% based on solid material present. The colloidal silica component (7.4 wt%), an adhesion promoter, has also been used as a binder (U.S. Pat. 4,118,537 to Vary et. al.), and indeed this component is not used as a filler film hardener, it has a much finer particle size than filler, viz less than 0.1 micrometer as compared to filler particles which are generally at least one micrometer in size (colloidal silica in water looks like a clear liquid).

When filler film hardener was added to the primer layer composition to toughen the overall non-stick finish by the primer layer resisting scratches which penetrated the overcoat, the primer layer would no longer adhere adequately to a smooth substrate. In a commercial primer having a fluoropolymer binder weight ratio of 2.4:1, incorporation of aluminum oxide film hardener into the primer reduced the adhesion to the substrate such that the substrate had to be roughened to achieve adequate adhesion (U.S. Pat. 5,250,356 to Batzer).

Other prior art documents disclosing application of coatings to roughened surfaces include US-A-4,016,125, FR-A-2,319,694 and FR-A-2,319,695. Co-grinding of coating components is disclosed in US-A-3,992,347, whilst addition of adhesion promoters to coatings is disclosed in FR-A-2,253,801 and FR-A-1,527,104.

The need remains for a primer for non-stick coatings which has both durability, adequate adhesion to smooth substrate, and adequate adhesion to a fluoropolymer overcoat.

### SUMMARY OF THE INVENTION

The present invention satisfies this need. More specifically, the present invention provides a process comprising applying a composition to a smooth substrate having a surface profile of less than 1.25 micrometers as measured by a model RT 60 surface roughness tester and baking to form a primer for non-stick coating on said smooth substrate, the composition comprising fluoropolymer and polymer binder in the weight proportion of 0.5 to 2.0:1 and in addition from 5 to 30 wt% inorganic filler film hardener, based on the baked weight of the composition, wherein said hardener is a water insoluble, finely divided material having a particle size of 1 to 100 micrometers. The invention also provides the structure obtainable thereby.

This composition is preferably in the form of an aqueous dispersion of the polymer and the film hardener, with the binder being in solution. When applied to a substrate as a primer layer, followed by overcoating with a fluoropolymer-containing composition, the composition provides durability to the resultant composite structure of substrate, primer, fluoropolymer overcoat, high adhesion to the substrate even when smooth surfaced, and high adhesion between the primer layer and overcoat.

It is unexpected that, in the presence of relatively small proportion of fluoropolymer and large proportion of film hardener component, both high adhesion to smooth substrates and high intercoat adhesion can be achieved, especially when the fluoropolymer/binder weight ratio is no greater than 1.4:1 and even no greater than 1.2:1

The composition used in the present invention also exhibits the unexpected attribute of relative universality of application as an adherent primer to a wide variety of smooth substrates, e g , aluminum, cold-rolled steel, stainless steel, and ceramics, such as glass, enamel, and pyroceram, i.e. the surface roughening commonly used especially with cold-rolled steel, stainless steel, and ceramics is not necessary. In the case of cold-rolled steel, this is a particularly valuable contribution, because the roughened steel surface is prone to rusting, especially in proximity or contact with water from the aqueous coating medium, and this can be avoided by the composition used in the present invention The primer also adheres very well to anodized aluminum, wherein the resultant aluminum oxide surface may be considered as a ceramic substrate. Thus, the present invention also includes the composite structure formed from primer of the present invention on the substrate surface and overcoat of fluoropolymer to provide the non-stick surface, with the surface of the substrate being smooth

### DETAILED DESCRIPTION

The fluoropolymer component of the composition used in the present invention is preferably polytetrafluoroethylene (PTFE) for simplicity of formulating the composition and the fact that PTFE provides the highest heat stability among the fluoropolymers. Such PTFE can also contain a small amount of comonomer modifier which improves film-forming capability during baking (fusing), such as perfluoroolefin, notably hexafluoropropylene (HFP) or perfluoro(alkyl vinyl) ether, notably wherein the alkyl group contains 1 to 5 carbon atoms, with perfluoropropylvinyl ether (PPVE) being preferred. The amount of such modifier will be insufficient to confer melt-fabricability to the PTFE, generally being no more than 0 5 mole%. The PTFE, also for simplicity, can have a single melt viscosity, usually at least 1X10⁹ Pa.s, but a mixture of PTFEs having different melt viscosities can be used to form the fluoropolymer component. While PTFE is preferred, the fluoropolymer component can also be melt fabriable fluoropolymer, either combined (blended) with the PTFE; or in place thereof.

Examples of such melt-fabricable fluoropolymers include TFE copolymers with one or more of the comonomers described above for the modified PTFE but having sufficient comonomer content to reduce the melting point significantly below that of PTFE. Commonly available melt-fabricable TFE copolymers include FEP (TFE/HFP copolymer) and PFA (TFE/PAVE copolymer), notably TFE/PPVE copolymer. The molecular weight of the melt-fabricable tetrafluoroethylene copolymers is unimportant except that it be sufficient to be film-forming and be able to sustain a molded shape so as to have integrity in the primer application. Typically, the melt viscosity of FEP and PFA will be at least 1X10²Pa·s and may range up to about 60-100X10³Pa·s as determined at 372°C according to ASTM D-1238.

The fluoropolymer component is generally commercially available as a dispersion of the polymer in water, which is the preferred form for the composition of the invention for ease of application and environmental acceptability and for use in the co-grinding process. By "dispersion" is meant that the fluoropolymers particles are stably dispersed in the aqueous medium, so that settling of the particles does not occur within the time when the dispersion will be used; this is achieved by the small size of the fluoropolymer particles, typically on the order of 0.2 micrometers, and the use of surfactant in the aqueous dispersion by the dispersion manufacturer. Such dispersions can be obtained directly by the process known as dispersion polymerization, optionally followed by concentration and/or further addition of surfactant.

The binder component is composed of polymer which is film-forming upon heating to fusion and is also thermally stable. This component is well known in primer applications for non-stick finishes, for adhering the fluoropolymer-containing primer layer to substrates and for film-forming within and as part of the primer layer. The fluoropolymer by itself has little to no adhesion to a smooth substrate. The binder is generally non-fluorine containing and yet adheres to the fluoropolymer. Preferred binders are those that are soluble or solubilized in water or a mixture of water and organic solvent for the binder, which solvent is miscible with water. This solubility aids in the blending of the binder with the fluorocarbon component in the aqueous dispersion form.

Examples of the binder component is polyamic acid salt which converts to polyamideimide upon baking of the composition to form the primer layer. This binder is preferred because in the fully imidized form obtained by baking the polyamic acid salt, this binder has a continuous service temperature in excess of 250°C. The polyamic acid salt is generally available as polyamic acid having an inherent viscosity of at least 0.1 as measured as a 0.5 wt% solution in N,N-dimethylacetamide at 30°C. It is dissolved in a coalescing agent such as N-methylpyrolidone, and a viscosity-reducing agent, such a furfuryl alcohol and reacted with tertiary amine, preferably triethylamine, to form the salt, which is soluble in water, as described in greater detail in U.S. Pat. 4,014,834 (Concannon). The resultant reaction medium containing the polyamic acid salt can then be blended with the fluoropolymer aqueous dispersion, and because the coalescing agent and viscosity-reducing agent are miscible in water, the blending produces a uniform coating composition. The blending can be achieved by simple mixing of the liquids together without using excess agitation so as to avoid coagulation of the fluoropolymer aqueous dispersion.

Another example of the binder component is polyethersulfone, which can have sparing water solubility but which can be dissolved in an organic solvent such as N-methylpyrrolidone which is miscible with water, with the resultant solution being uniformly blendable with the fluoropolymer aqueous dispersion. Polyethersulfones are amorphous thermoplastic polymers with a glass transition temperature of about 230°C and a sustained service temperature of about 170°C to 190°C.

In another embodiment of the present invention, the composition is in the form of an organic solvent such as N-methylpyrrolidone which contains as a dispersion, the fluoropolymer such as PTFE micropowder, having a melt viscosity in the range of 1X10² to 1X10⁷ Pa·s, the binder such as polyamic acid, polyphenylene sulfide, polyetherether ketone, or polyethersulfone, and the filler film hardener, preferably with at least a portion of the binder dissolved in the organic solvent, and surfactant. This embodiment is especially useful for applying a primer layer to metal strip, which is called coil coating. The PTFE micropowder can be made by aqueous dispersion polymerization so that it can be in a form which is convenient to use in the embodiment of this invention in which the composition is in the form of an aqueous dispersion.

For simplicity, only one binder need be used to form the binder component of the composition.

The proportion of fluoropolymer and binder in compositions used in the present invention are preferably in the weight ratio of 0.8 to 1.2:1. The weight ratios of fluoropolymer to binder disclosed herein are based on the weight of these components in the primer layer formed by baking the composition after application to its substrate. The baking drives off the volatile materials present in the coating composition, including the salt moiety of the polyamic acid salt as the imide bonds are formed during baking. For convenience, the weight of binder, when it is polyamic acid salt which is converted to polyamideimide by the baking step, can be taken as the weight of polyamic acid in the starting composition, whereby the weight ratio of fluoropolymer to binder can be determined from the amount of fluoropolymer and binder in the starting composition. When the composition of the invention is in the preferred aqueous dispersion form, these components will constitute about 5 to 50 wt% of the total dispersion.

The inorganic filler film hardener component is one or more filler type materials which are inert with respect to the other components of the composition and thermally stable at its eventual baking temperature which fuses the fluoropolymer and binder. The film hardener is water insoluble so that it is uniformly dispersible but not dissolved in the aqueous dispersion form of the composition of the invention. By filler-type material means that the material is finely divided, having a particle size of 1 to 100 micrometers, preferably 2 to 20 micrometers. The film hardener component imparts durability to the primer layer by resisting penetration of sharp objects that have penetrated the fluoropolymer overcoat, which results from both the hardness or toughness of the material itself and the amount of it that is present in the composition.

Examples of the film hardener include the silicate compounds such as metal silicate, e.g., aluminum silicate, and metal oxides such as titanium dioxide. Silicate compounds have molecular formulae with varying amounts of particular anion moieties present; this invention is not limited to any particular silicate molecular formula.

For simplicity, only one film hardener need be used. Thus, the present invention contemplates a simplified composition wherein the essential ingredients insofar as adhesion to the substrate and the overcoat and durability are concerned, are a single fluoropolymer, preferably PTFE, a single binder, preferably polyamic acid salt, and a single film hardener, metal silicate, preferably aluminum silicate. In the fused form, as the primer layer on a substrate of a composite structure, the same simplified composition will exist, except that the polyamic acid salt will be polyamideimide.

The use of small amounts of the film hardener in the composition, e.g., less than 5 wt%, based on the combined weight of fluoropolymer, binder, and film hardener, has little effect on durability of the primer layer. Preferably the proportion of the film hardener in the primer layer is from 10 to 30 wt% and more preferably, from 15 to 30 wt%, all based on the weight of the baked composition.

The composition will usually contain pigment in preferably a mill base medium that is either soluble in or miscible with the water of the fluoropolymer aqueous dispersion.

The pigment mill base is produced by milling (grinding) pigment in its liquid medium, which produces uniformity and small pigment size. The preferred medium is water which contains surfactant so that the pigment mill base becomes an aqueous dispersion of the pigment by the milling process.

In a preferred embodiment to make the composition the film hardener and solution of binder is co-ground with the pigment to form the aqueous dispersion of pigment containing dissolved binder. It has been found that this co-grinding increases both the durability of the non-stick finish and the adhesion of the primer layer to the substrate, and this is another unexpected result of the present invention. In this embodiment, a broader proportion of fluoropolymer to binder can be used.

The co-grinding reduces the particle size of the pigment and the filler film hardener, whether by deagglomeration or size reduction of unagglomerated particles, e.g., the particles after co-grinding are smaller than the particles prior to co-grinding. Co-grinding produces the preferred film hardener particle size range of 2 to 10 micrometers. The particular manner of co-grinding and the length of time that it is carried out is unimportant so long as the particles are made smaller, and the results of appreciable improvement in adhesion to the substrate and durability is obtained; that is to say that the co-grinding is carried out in an effective amount to produce this result.

In accordance with the aqueous dispersion embodiment of the present invention, the solution of binder and the water medium containing the pigment and surfactant are added one to the other, either prior to the milling of the pigment or during the pigment milling operation. In any event, the co-grinding of the binder solution with the pigment reduces the particle size of the pigment, whether by deagglomeration of pigment particles or size reduction of deagglomerated particles, while achieving an intimate mixture with the binder in solution by virtue of the grinding action in the presence of the dissolved polymer binder. The milling (co-grinding) after addition of the binder solution is effective with respect to the particular milling equipment used and the time of co-grinding, to obtain an appreciable improvement at least in adhesion to the substrate of the baked layer ultimately obtained from the co-ground dispersion. In the case of PES binder, wherein this material is only sparingly soluble, whereby a portion of the binder may be present as particles, the binder is also co-ground with the pigment. Thus, the expression "co-grinding" as used herein is used to mean milling of the pigment in the presence of binder, which may be entirely or partially dissolved and wherein the particle size of the pigment is reduced.

Inorganic filler film hardener to make the layer harder, i.e., more durable by virtue of improved scratch resistance, is also added to the pigment milling operation. Since the film hardener is water insoluble, it will be co-ground, i.e., particles reduced in size along with the pigment. The filler nature of the film hardener means that it has a particle size usually within the range of one to 100 micrometers, but in the course of co-grinding the particle size will generally be reduced to less than 20 micrometers and usually within the range of 2 to 10 micrometers. As in the case of the pigment, the main purpose of co-grinding of the film hardener with the binder is to achieve an intimate mixture with the binder as in the case of the pigment. Examples of film hardener include the silicate compounds, such as metal silicate, e.g., aluminum silicate, and metal oxides, such as titanium dioxide and aluminum oxide. When titanium dioxide is used as the film hardener, the amount used is generally several time greater than would be used for coloring the layer formed from the composition.

Co-grinding of the film hardener with the polymer binder solution unexpectedly improves the durability of the layer or non-stick coating containing it, as compared with the same layer composition prepared by separate grinding of these components.

The co-ground aqueous dispersion of pigment, binder, and film hardener, is then blended with the aqueous dispersion of fluoropolymer in the proportions desired to produce the aqueous dispersion finish composition desired. The apparatus used for the milling operation and subsequent blending with the aqueous dispersion of fluoropolymer can be conventional. The mixing action used to blend the dispersions together is short of causing the fluoropolymer dispersion to coagulate. Under this condition, the finish composition is obtained in aqueous dispersion form.

The solids concentration of the finish dispersion can vary widely but will generally be from 10 to 75 wt%. The proportion of fluoropolymer to binder for this co-grinding embodiment of the present invention can also vary widely, e.g., from 0.5 to 8.1, although a preferred weight ratio is 0.5 to 2.0: 1 and more perferably 0.8 to 1.5:1. The proportion of pigment will depend on the particular pigment and intensity of color desired. For the film hardener, its proportion will be that which is effective to increase the durability of the layer formed from the composition. More than 5 wt% will be required, based on the weight of the composition after baking (all volatiles such as water, solvent, surfactant, viscosity control and leveling agent, are driven off, and more than 10 wt% is preferred. No more than 30 wt% can be accommodated by the layer formed from the finish composition, before other properties deteriorate.

The aqueous finish dispersion of the present invention made by cogrinding can be applied to the substrates to make products such as have been made with non-stick finishes prior to the present invention, such as mentioned hereinbefore. The application can be by conventional technique and equipment, such as spraying or roller coating depending on the particular product (substrate) involved and its shape. The application can produce a one-coat non-stick finish or the primer layer of a multiple layer finish, in which the primer layer is overcoated with one or more additional fluoropolymer-containing layers, which in the latter case are commonly called midcoat and topcoat, each having a particular composition designed to produce particular performance and/or appearance effects.

In any event, the effect of the co-grinding to produce the more intimate mixture improves the adhesion of the layer to the substrate resulting from baking the composition applied to the substrate to fuse the layer to itself and the substrate. This improvement is obtained in comparison with applying the same composition to the same substrate by the composition having been made by milling the pigment and film hardener separate from the binder solution and merely blending the resultant dispersion and binder solution together.

The temperature of baking will depend on the particular fluoropolymer present and the time of baking. For PTFE as the fluoropolymer component, a baking temperature of 427°C (800°F) which rises to 440°C (825°F) in five minutes is preferred. For melt fabricable fluoropolymer, a baking temperature of 415°C (780°F) which rises to 427°C (800°F) in three minutes is preferred. The thickness of the layer from the composition made using co-grinding will generally be from 5 to 20 micrometers, and overcoat layer(s) will generally be from 10 to 20 micrometers.

The improvement described above with respect to aqueous dispersion compositions, in which the co-ground aqueous dispersion is added to the fluoropolymer aqueous dispersion can be obtained when an organic liquid is used as the coating medium in place of water. Coil coating of metal strip with fluoropolymer primer is presently done using an organic solvent carrier for the fluoropolymer, which is present in the carrier as particles, notably PTFE micropowder. In accordance with this embodiment of the present invention, the fluoropolymer, pigment, polymer binder, and film hardener are all co-ground together with surfactant to form a dispersion of the solid ingredients in the organic solvent medium and to obtain the improved adhesion described above. Adhesion promoter can also be included in this co-grinding step. In this embodiment, when an fluoropolymer containing overcoat is used in aqueous dispersion form, the organic-solvent composition formed layer is dried so that all water-incompatible solvent is removed prior to applying the overcoat, otherwise successive coats can be applied when the preceding layer is preferably dried to the touch.

### OTHER ASPECTS OF THE COMPOSITION

The composition in aqueous dispersion form may contain such other additives as adhesion promoters, such as colloidal silica and a phosphate compound, such as metal phosphate, e.g., Zn, Mn, or Fe phosphate, the phosphate compound also being useful in the embodiment wherein the composition is in an organic solvent medium. The phosphate in combination with silicate film hardener provides appreciable improvement in the adhesion of the primer layer to the substrate even without the co-grinding step being used. The amount of metal phosphate which can be advantageously used is about 1/10 to 1/2 the weight amount of the metal silicate. The adhesion promoter can also be used in the composition described with respect to the co-grinding embodiment in either the aqueous dispersion or organic liquid form of the composition.

The composition used in the present invention can also be applied to substrates by conventional means. Spray and roller application are the most convenient application methods, depending on the substrate being coated. An overcoat of one or more fluoropolymer-containing layers can then be applied by conventional methods to the primer layer prior to its drying. The overcoat can consist for example of a midcoat and a topcoat, with different compositions to provide the durability, non-stick and appearance effect desired. At least the midcoat would contain film hardener to start the protection against scratching at a layer above the primer layer. When the primer and overcoat layer compositions are aqueous dispersions, the overcoat composition can be applied to the primer layer preferably after drying to touch. When the primer layer is made by applying the composition from an organic solvent, and the next layer (midcoat or topcoat) is applied from an aqueous medium, the primer layer should be dried so that all water-incompatible solvent is removed before application of such next layer.

The resultant composite structure can be baked to fuse all the coatings at the same time to form the non-stick coating on the substrate. When the fluoropolymer is PTFE, a quick high bake temperature is preferred, e.g., for 5 min. at a temperature starting at 427°C (800°F) and rising to 440°C (825°F). When the fluoropolymer in the primer on the overcoat is a blend of PTFE and FEP, e.g., 50-70 wt% PTFE and 50-30 wt% FEP the bake temperature may be reduced to 415°C (780°F) rising to 427°C (800°F) in 3 minutes (total bake time). The baked primer layer thickness will generally be between 5-15 micrometers, and the overcoat layer thickness will generally be from 10-20 micrometers for both the midcoat layer and the topcoat layer.

In the resultant composite structure, the substrate can be of any material which can withstand the bake temperature, such as metal and ceramics, examples of which include aluminum, anodized aluminum, cold-rolled steel, stainless steel, enamel, glass, and pyroceram. The substrate can be smooth and needs to be clean. For pyroceram and some glass, improved results are obtained by activation of the substrate surface such as by a slight chemical etch, which is not visible to the naked eye, i.e., the surface is still smooth. The substrate can also be chemically treated with an adhesion agent such as a mist coat of polyamic acid salt, such as disclosed in U.S. Pat. 5,079,073 to Tannenbaum. The primer layer can be considered as the first fluoropolymer-containing layer on the substrate, and preferably the primer layer is directly bonded to the substrate.

Products have non-stick finishes made using primer compositions of the present invention include cookware, bakeware, rice cookers and inserts therefor, water pots, iron sole plates, conveyors, chutes, roll surfaces, cutting blades, etc.

In the following Examples, the substrates are all smooth, characterized by a surface profile of less than 1.25 micrometers (50 microinches) as measured by a model RT 60 surface roughness tester made by Alpa Co. of Milan, Italy. Durability and adhesion can be measured by any test which discriminates between adequate and inadequate results for various coatings.
a. In the present case, durability is determined by the "tiger paw" abuse test wherein the coated substrate is continuously scratched with multiple ball point pen tips which are held by a weighted holder (400g total weight) which rotates the pens against and around the surface of the coated substrate. To accelerate the failure of the entire thickness of the coating, i.e., the rotation of the pens produces a continuous circular-shaped path penetrating the entire coating to reach the substrate, the substrate is heated at 205°C during this scratch test, and the time to such failure is recorded. The longer the time to failure, the better the durability of the non-stick coating.
b. Adhesion of the primer layer to the substrate and to the overcoat was qualitatively determined first by the ability of the non-stick coating to remain tightly adhered to the substrate after baking and cooling, despite the stresses created by the coating wanting to shrink more than the substrate and second, by whether the "tiger paw" abuse test either causes inter-layer separation or separation of the primer layer from the substrate by the pen tips abrading the coatings on the substrate. In this sense, the "tiger paw" abuse test tests the overall durability of the coating - both scratch resistance and adhesion to the substrate and between layers. Additional testing of adhesion is described in the Examples.
c. All the testing is done with a midcoat and topcoat applied to the primer layer, all applications being done by spraying. The midcoat had the composition which is essentially the same as set forth in Table 2 of U.S. Pat. 5,240,775, except that the 40.704 wt% of PTFE was a blend of 85 wt% PTFE and 15 wt% PFA. The topcoat composition was essentially the same as the topcoat composition set forth in the Table bridging cols. 2 and 3 of U.S. Pat. 5,250,356, except that the 71.5 wt% PTFE was a blend of 95 wt% PTFE and 5 wt% PFA.
d. The primer composition used was in the form of an aqueous dispersion having the following ingredients:

| | Weight Percent |
|---|---|
| black pigment | 2.025 |
| ultramarine blue pigment | 1.408 |
| Ludox® colloidal silica | 0.909 |
| PTFE (solids in aqueous disp.) | 4.170 |
| polyamic acid | 4.195 |
| aluminum silicate | 3.323 |
| ferric phosphate | 0.820 |
| Tamol® SN surfactant | 0.284 |
| dionized water | 72.344 |
| triethanolamine | 0.069 |
| Triton® X-100 surfactant | 0.713 |
| diethylethyl alcohol amine | 0.592 |
| triethyl amine | 1.184 |
| furfuryl alcohol | 3.587 |
| N-methylpyrrolidone (NMP) | 4.330 |

Any variations of this composition will be disclosed in the Examples.
e. Unless otherwise indicated, the aqueous dispersion of d. was made by co-grinding of the pigment, aluminum, silicate, polyamic acid salt prepared by reacting the polyamic acid with the triethyl amine in NMP/furfuryl alcohol, and the ferric phosphate in water in a Netzch® mill under the following conditions: 80% load of glass balls, pump rate of 90 rpm agitator shaft speed 840 rpm, and dispersion throughput of 0.0038m³/hr (30 gal/hr). The aluminum silicate had the largest particle sizes at the start of co-grinding, and its average particle size was reduced to 3 to 7 micrometers by the co-grinding. All of the liquid ingredients of the composition of d. were present in the co-grind medium except for the Ludox®, ferric phosphate, and Triton® X-100. The resultant aqueous dispersion was then blended with the PTFE aqueous dispersion and remaining ingredients until uniformly dispersed in a mixing tank having an agitator blade operating at 70 rpm to form the dispersion of d. Additional water and NMP are added to adjust viscosity to 100 to 250 centipoises measured at 25°C.

### EXAMPLES

### EXAMPLE 1

Non-stick coating was formed on clean but not etched Pyrex® glass plates measuring 10.16 X 15.24 cm (4 by 6 inches) using the primer composition of d., except that aluminum silicate and ferric phosphate were not present in the composition, followed by baking and scoring the coating through its thickness with a razor blade around the edge of the plate, spaced about 0.636 cm (1/4 in) from the edges of the plate, to start edge separation of the coating from the plate. Adhesion was then tested by vertically suspending the coated/scored plate in boiling water. The coating immediately came off of the plate.

Repetition of the experiment in the preceding paragraph except that the aluminum silicate film hardener was included in the primer layer composition, led to the coating surviving 30 min. in the boiling water before separating from the plate. Surprisingly, the presence of the large amount of aluminum silicate in the composition improved its adhesion to the Pyrex® glass plate.

Repetition of the experiment in the preceding paragraph except that ferric phosphate was also included in the primer layer composition, led to the coating surviving the boiling water for much more than 30 min.

### EXAMPLE 2

In this series of experiments, adhesion of the non-stick coating on frying pans was tested b cross-hatching the coating with a razor blade to form a 10 X 10 matrix of 0.3175 cm (1/8 in) squares, immersing the frying pans in water heated at 90.5°C (195°F) and containing 0.3 wt% detergent for 16 hours. After this immersion exposure, the non-stick coating was dried and the cross-hatch matrix was subjected to tape (3M type 610) removal in all directions. If less than 3 squares from the matrix were removed by the tape in any direction, the coating was considered to pass this immersion test

When the primer layer composition was that of d. above, the non-stick coating passed this immersion test on frying pans having smooth cold-rolled steel, stainless steel, anodized aluminum, cast iron, glass, and lightly etched pyroceram surfaces for receiving the coating.

When the proportion of fluoropolymer in the primer layer composition was increased so as to provide a fluoropolymer to binder weight ratio of 1.5:1, the resultant coating also passed this immersion test.

When the proportion of fluoropolymer in the primer layer composition was increased so as to provide a fluoropolymer to binder weight ratio of 2.4, the resultant coating failed the immersion test.

The scratch resistance as well as adhesion of the non-stick coating was tested by the "tiger paw" abuse test, with a time until failure exceeding 90 minutes being desired. For the non-stick coating wherein the primer layer composition of d. was used on all of the substrates mentioned previously in this EXAMPLE, the time until failure exceeded 90 minutes Lightly etched non-stick coated pyroceram for example exceeded 100 minutes. Non-stick coated stainless steel exceeded 135 minutes.

When the primer layer composition of d. was prepared by the separately milling the pigment and the film hardener and not having binder solution present in either milling operation, followed by blending the aqueous fluoropolymer dispersion with the binder solution, the film hardener aqueous dispersion, and the pigment aqueous dispersion, the resultant non-stick coating failed the "tiger paw" abuse test in less than 60 minutes.

## Claims

1. Process comprising applying a composition to a smooth substrate having a surface profile of less than 1.25 micrometers as measured by a model RT 60 surface roughness tester and baking to form a primer for non-stick coating on said smooth substrate, the composition comprising fluoropolymer and polymer binder in the weight proportion of 0.5 to 2.0:1 and in addition from 5 to 30 wt% inorganic filler film hardener, based on the baked weight of the composition, wherein said hardener is a water insoluble, finely divided material having a particle size of 1 to 100 micrometers.

2. The process of claim 1 wherein said ratio is 0.8 to 1.2:1.

3. The process of claim 1 wherein the fluoropolymer component is PTFE having a single melt viscosity.

4. The process of claim 1 wherein the binder component consists of a single polymer binder.

5. The process of claim 1 wherein said inorganic filler film hardener is silicate compound.

6. The process of claim 1 wherein the composition further comprises adhesion promoter.

7. The process of claim 6 wherein said adhesion promoter is phosphate compound.

8. A structure in the form of a baked primer layer on a smooth substrate having a surface profile of less than 1.25 micrometers as measured by a model RT 60 surface roughness tester obtainable by the process of any preceding claim.

## Patentansprüche

1. Verfahren umfassend das Anbringen einer Zusammensetzung auf ein glattes Substrat mit einem Oberflächenprofil von weniger als 1,25 Mikrometer, gemessen gemäß einem Oberflächenrauhigkeits-Tester Model RT 60, und das Aushärten, um einen Primer für eine Antihaftbeschichtung auf dem glatten Substrat zu bilden, wobei die Zusammensetzung Fluorpolymer und Polymerbindemittel im Gewichtsverhältnis von 0,5 bis 2,0:1 und zusätzlich von 5 bis 30 Gew.-% anorganischen Füllstofffolienhärter, basierend auf dem Gewicht nach dem Aushärten der Zusammensetzung, umfasst, worin der Härter ein wasserunlösliches, feinteiliges Material ist, das eine Partikelgröße von 1 bis 100 Mikrometer aufweist.

2. Verfahren nach Anspruch 1, worin das Verhältnis 0,8 bis 1,2:1 ist.

3. Verfahren nach Anspruch 1, worin die Fluorpolymerkomponente PTFE ist, das eine einfache Schmelzviskosität aufweist.

4. Verfahren nach Anspruch 1, worin die Bindemittelkomponente aus einem einzelnen Polymerbindemittel besteht.

5. Verfahren nach Anspruch 1, worin der anorganische Füllstofffolienhärter eine Silikatverbindung ist.

6. Verfahren nach Anspruch 1, worin die Zusammensetzung ferner einen Haftbeschleuniger umfasst.

7. Verfahren nach Anspruch 6, worin der Haftbeschleuniger eine Phosphatverbindung ist.

8. Struktur in Form einer ausgehärteten Primerschicht auf dem glatten Substrat mit einem Oberflächenprofil von weniger als 1,25 Mikrometer, gemessen gemäß einem Oberflächenrauhigkeits-Tester Model RT 60, erhaltbar durch Verfahren nach einem der vorstehenden Ansprüche.

## Revendications

1. Procédé comprenant l'application d'une composition sur un substrat lisse possédant un profil de surface de moins de 1,25 micromètres, tel que mesuré par un testeur de rugosité de surface modèle RT 60, et une cuisson pour former une couche de fond pour un revêtement anti-adhésif sur ledit substrat lisse, la composition comprenant un fluoropolymère et un liant polymère dans la proportion en poids de 0,5 à 2,0:1 et en outre de 5 à 30% en poids d'un durcisseur de film charge inorganique, sur la base du poids cuit de la composition, dans lequel ledit durcisseur est un matériau finement divisé, insoluble dans l'eau possédant une taille de particules de 1 à 100 micromètres.

2. Procédé selon la revendication 1, dans lequel ledit rapport est de 0,8 à 1,2:1.

3. Procédé selon la revendication 1, dans lequel le composant de fluoropolymère est un PTFE possédant une viscosité à l'état fondu unique.

4. Procédé selon la revendication 1, dans lequel le composant de liant est constitué d'un liant polymère unique.

5. Procédé selon la revendication 1, dans lequel ledit durcisseur de film charge inorganique est un composé de silicate.

6. Procédé selon la revendication 1, dans lequel la composition comprend en outre un promoteur d'adhérence.

7. Procédé selon la revendication 6, dans lequel ledit promoteur d'adhérence est un composé de phosphate.

8. Structure sous la forme d'une couche de fond cuite sur un substrat lisse possédant un profil de surface de moins de 1,25 micromètres, tel que mesuré par un testeur de rugosité de surface modèle RT 60, pouvant être obtenue par le procédé selon l'une quelconque des revendications précédentes.
